Europäisches Patentamt

European Patent Office

Office européen des brevets

(11) Numéro de publication: **0 368 979 B1**

## FASCICULE DE BREVET EUROPEEN

(45) Date de publication de fascicule du brevet: **15.12.93**

(51) Int. Cl.5: **G06F 15/16**, G06F 15/40, G05B 19/05

(21) Numéro de dépôt: **89906144.4**

(22) Date de dépôt: **18.05.89**

(86) Numéro de dépôt internationale :
**PCT/FR89/00237**

(87) Numéro de publication internationale :
**WO 89/11698 (30.11.89 89/28)**

(54) **PROCEDE POUR LA TRANSMISSION D'INFORMATIONS ENTRE DES ENTITES APTES A EMETTRE ET/OU A RECEVOIR DES INFORMATIONS.**

(30) Priorité: **18.05.88 FR 8806966**

(43) Date de publication de la demande:
**23.05.90 Bulletin 90/21**

(45) Mention de la délivrance du brevet:
**15.12.93 Bulletin 93/50**

(84) Etats contractants désignés:
**BE DE GB IT NL SE**

(56) Documents cités:
**EP-A- 0 132 069**
**EP-A- 0 153 856**
**EP-A- 0 200 365**

**Proceedings ACM'84, Annual Conference, The Fifth Generation Challenge, 8-10 Octobre 1984, San Francisco, CA., ACM, J.C. Browne et al.: "Zeus: An object-oriented distributed operating system for reliable applications", pages 179-188.**

(73) Titulaire: **TELEMECANIOUE**
**43-45 boulevard Franklin Roosevelt**
**F-92504 Rueil Malmaison Cedex(FR)**

(72) Inventeur: **DOUCET, René**
**Lumbin**
**F-38660 Le Touvet(FR)**

(74) Mandataire: **de Saint-Palais, Arnaud Marie et al**
**CABINET MOUTARD**
**35, Avenue Victor Hugo**
**F-78180 Voisins le Bretonneux (FR)**

Rank Xerox (UK) Business Services
(3.10/3.6/3.3.1)

## Description

La présente invention concerne un procédé de transmission de type série multiplexée utilisable dans le cadre d'échanges d'informations entre les capteurs, les actionneurs et les automates programmables d'un processus.

D'une manière générale, on sait que la communication entre les capteurs, actionneurs et automates programmables est généralement réalisée en fil à fil, ce qui représente des coûts de câblage importants sans réelle qualité de service.

L'invention concerne plus particulièrement un système de communication mieux adapté qui réduit les coûts de câblage et qui permet la connexion de tout équipement industriel intervenant dans un système de contrôle et de commande et respectant un standard approprié.

Son objectif est de concevoir des systèmes à structures modulaires évolutives à partir d'une gamme limitée de modules matériels qui permet d'envisager une production de masse afin de réduire les coûts.

Cette structure modulaire évolutive doit permettre, par personnalisation logicielle, de répondre à un large éventail d'applications.

Dans un tel système, l'invention propose un protocole d'échanges d'informations entre des équipements de traitement d'informations de type automate programmable ou calculateur industriel, des équipements d'instrumentation de type capteurs ou actionneurs plus ou moins intelligents et des interfaces opérateurs de type signalisations et commandes individuelles d'actionneurs.

Ce protocole doit être suffisamment général pour permettre d'interconnecter facilement des équipements qui peuvent être d'origines diverses afin de constituer un système de contrôle et de commande industriel sans problème de convivialité entre ces différents équipements.

Les échanges d'informations s'effectuent au moyen d'une ligne apte à effectuer une transmission sans acquittement de type série multiplexée (par exemple un câble coaxial, fibres optiques), entre des composants du système (entités) permettant de recevoir ou d'émettre des informations en provenance ou à destination du support de communication et d'assurer des interfaces physiques et logiques entre les outils de ligne et les interfaces d'application, des outils de ligne permettant d'assurer l'adaptation des signaux entre les composants du système et la ligne, et d'un Arbitre de Bus.

Les interfaces d'application peuvent être de type différent et peuvent, par exemple, consister en :
- des équipements de réception (sorties logiques, analogiques, visualisations interfaces d'acquisitions d'informations, équipements spécialisés...) ;
- des équipements d'émission qui émettent des informations sur la ligne lorsqu'ils sont sollicités, ces informations pouvant consister en des acquisitions logiques ou analogiques de capteurs, des commandes issues d'automates programmables, des échanges d'informations interautomates, des informations spécialisées nécessitées par l'application ;
- des équipements de réception et d'émission pouvant être le résultat d'une combinaison d'équipements précédemment définis mais également, par exemple, des instrumentations intelligentes, des automates réflexes, des automates séquentiels, des calculateurs de conduite, d'aide à la maintenance, des équipements spécialisés nécessités par l'application.

Chaque échange sur la ligne de transmission s'effectue par une succession :
- d'une première trame pouvant par exemple comprendre un préambule, un mot de 16 bits, ..., un bloc de contrôle, par exemple de type "CRC" (code cyclique de détection des erreurs de concordance des informations), ..., cette trame correspondant à la nomenclature de l'information qui va être mise à disposition sur la ligne, et
- d'une seconde trame pouvant par exemple comprendre un préambule, une valeur, un bloc de contrôle, par exemple de type "CRC", ..., cette trame contenant la valeur de l'information correspondant à cette nomenclature, ce mot représentant, en fait, le contenu de la donnée identifiée par sa nomenclature.

Il convient de noter que l'usage d'un code cyclique, particulièrement fiable pour la détection des erreurs de concordance des informations échangées (par exemple de type "CRC"), permet de suppléer à l'absence de procédure d'acquittement dans les échanges d'informations.

Ainsi, le couple nomenclature/information peut être :
- le résultat d'une conversion analogique/numérique issue d'un capteur ;
- une commande à destination d'un actionneur analogique ;
- une combinaison d'états logiques issus de capteurs ;
- une combinaison d'états logiques à destination d'actionneurs ;
- une variable interne à un automate ;
- la valeur d'un paramètre ;

- toute combinaison logique de 16 bits.

Les échanges d'informations sont rythmés par l'Arbitre de Bus qui diffuse cycliquement sur la ligne les nomenclatures, et s'effectuent selon le processus suivant :

- l'Arbitre de Bus diffuse une nomenclature ;
- la station qui dispose de cette nomenclature se reconnaît ;
- la station qui s'est reconnue met l'information associée à la nomenclature qui vient d'être émise à disposition sur la ligne ;
- les stations qui veulent consommer cette information précédemment identifiée par sa nomenclature, lisent alors l'information émise par la station productrice ;
- l'Arbitre de Bus consomme également l'information afin de s'assurer que la transaction s'est effectuée correctement et le cycle continue par l'envoi d'une nouvelle nomenclature.

Dans le cas d'un trafic cyclique, les fonctions de l'Arbitre de Bus peuvent donc se résumer comme suit :

- la gestion de la nomenclature à émettre en fonction de la fréquence d'émission de cette nomenclature ;
- la vérification de l'émission de la donnée associée à cette nomenclature ;
- le cadencement des trames ;
- l'émission de la nouvelle nomenclature ;
- le test de fonctionnement du système de transmission (détection d'erreurs, de collisions, du bon fonctionnement des équipements connectés).

Les fonctions d'un récepteur d'informations peuvent se résumer comme suit :

- la détection de présence d'une nomenclature sur la ligne ;
- la réception de cette nomenclature ;
- la reconnaissance d'utilité de réception d'une information associée à cette nomenclature ou l'attente d'une nouvelle nomenclature ;
- la réception de la donnée associée à la nomenclature ;
- le rangement de la donnée associée à la nomenclature qui vient d'être lue.

Les fonctions d'un émetteur d'informations se résument également comme suit :

- la détection de la présence d'une nomenclature sur la ligne ;
- la réception de cette nomenclature ;
- la reconnaissance d'utilité d'émission de la donnée associée à cette nomenclature ou l'attente d'une nouvelle nomenclature ;
- la sélection de la donnée à émettre, associée à la nomenclature qui vient d'être lue ;
- l'émission de la donnée associée à la nomenclature.

Les émetteurs-récepteurs d'informations regroupent l'ensemble des fonctions des émetteurs et des récepteurs d'informations, précédemment énumérées.

De la description qui précède, il ressort que selon ce système de transmission :

. Chaque équipement connecté à la ligne de transmission peut accéder à l'intégralité des informations qui circulent sur cette ligne. Par construction, l'effet multiplicateur de signaux permet de mettre l'information émise par un abonné à disposition de tous les autres abonnés. Cette particularité donne virtuellement à chaque abonné l'impression d'être "connecté" à l'intégralité des informations qui circulent.

. Une information issue d'un capteur peut donc être acquise par tous les autres équipements connectés à la ligne, dès que cette information est émise sur la ligne, le câblage se limitant au raccordement du capteur sur une carte d'acquisition d'un abonné de la ligne.

. Le pontage d'informations entre plusieurs équipements de traitement peut s'effectuer par la ligne car les débits et les temps de rafraîchissement sont, dans la majorité des cas, compatibles avec l'aspect temps réel des automates réflexes.

L'ensemble des données échangées sur un tel système (essentiellement des échanges cycliques de variables d'état) peut être modélisé par une base de données distribuées, dont chaque entité connectée sur la ligne de transmission conserve une copie des données l'intéressant, soit comme producteur, soit comme consommateur.

En fait, cette base de données distribuées, qui regroupe une collection de données regroupées par objet, est une représentation abstraite des informations qui sont distribuées sur la ligne de transmission, pour faire en sorte qu'à chaque instant, tous les utilisateurs d'un objet doivent avoir la même perception de cet objet. Cette perception est modélisée par une trame qui s'applique à chaque type d'information qui doit être distribuée sur la ligne de transmission. Ce modèle permet d'assurer une correspondance biunivoque entre un objet de la base de données et une entité adressable d'un interface de liaison d'un appareil. Une telle correspondance est illustrée sur les tableaux I et II ci-après.

## TABLEAU I

### BASE DE DONNEES DISTRIBUEES

#### OBJET

Description
{
- L_Identification
- nom : "A_name"
- Classe : "Class"
- Period = (apériodique)
- Type de données : (description du type)
}

Etat
{
- Validation : "Valid"
- Valeur codée
}

## TABLEAU II

### ENTITE LOCALE

Données Objet

L_Identification
nom : "A_name"
Classe
Period
Type de données
}
Description
{
- Description Image

- Utilisation
}

Données Image

### CONFIGURATION LOCALE DE L'OBJET

Configuration-identification
Attribut Clef
Description des données
L_Identification
Nom
Classe
Période
Type de données
Description des données
Utilisation

### CONFIGURATION DE L'ENTITE

Classe (démarrage automatique commandé).
"List Of" (références relatives à la configuration des données d'un objet pour chaque objet produit par l'entité).

"List Of*" (références relatives à la configuration d'un objet pour chaque objet connu et non produit par l'entité).

Comme on peut le voir sur le tableau I, la trame des objets de la base de données comprend une liste d'attributs permettant d'identifier les objets et supportant des variables spécifiques de cet objet. Cette liste pourra plus particulièrement comprendre :

4

. Un attribut L__I d'identification constitué par un entier de 16 bits, qui sert à identifier l'objet dans la ligne de transmission. Il représente l'identification utilisée de façon interne dans la ligne et dans la base de données.

. Un attribut de nom "A__name" : cet attribut, de type chaîne de caractères, sert à identifier les objets entre entités coopérantes. Cette identification peut également être utilisée.

. Un attribut de classe "class" : cet attribut indique la classe de l'objet incluant une variable et une description.

. Un attribut de période : cet attribut contient une valeur apériodique si l'objet ne doit pas être remis à jour périodiquement, ou la valeur de la période de rafraîchissement requise.

. Un attribut de type de données "Data__type" : cet attribut doit contenir le nom du type de données. Il définit à la fois la sémantique et les règles de codage de l'attribut de valeur codée.

. Un attribut de validation "Valid", qui contiendra une valeur signalant une faute si l'objet n'est pas, sur le moment, disponible à un consommateur pour une raison quelconque, par exemple pour une absence de fournisseur, ou une modification au cours de sa définition. Il convient cependant de noter qu'un objet peut être valide dans la base de données alors qu'il est invalide pour un consommateur, par exemple en raison d'un défaut du consommateur.

. Un attribut de Valeur Codée : cet attribut doit contenir, soit la valeur courante de l'objet, codée selon les règles définies par l'attribut "type de données" ou la valeur "indéfinie". La valeur courante est remise à jour périodiquement ou au hasard, selon ce qui est défini dans l'attribut de période. Cet attribut contient la dernière valeur envoyée sur la ligne à la suite d'un message ID__DAT LPDU.

Les informations qui doivent être mémorisées dans chaque entité locale utilisable par la base de données distribuées sont modélisées localement, au niveau de la couche de liaison, selon une configuration objet déterminée "configuration locale de l'objet" incluant les attributs suivants (tableau II) :

- un attribut de configuration et d'identification qui identifie la configuration locale des données de l'entité,
- un attribut de description de données qui contient les attributs statiques de la trame des objets de la base de données, à savoir :
  - l'attribut d'identification,
  - l'attribut de nom "A__name",
  - l'attribut de classe "class",
  - l'attribut de période "period",
  - l'attribut de type de données "Data__type",
- un attribut de "description image" qui contient les attributs statiques des données image,
- un attribut d'utilisation (fournisseur et/ou consommateur, ou aucun de ces deux modes).

Les paramètres caractéristiques de chaque entité sont modélisés selon une configuration objet "configuration de l'entité" lui permettant de communiquer avec une autre entité, cette modélisation faisant intervenir les attributs suivants :

- un attribut de classe = démarrage automatique, démarrage commandé,
- un attribut "List of" qui doit contenir la liste des références relatives à la configuration des données d'un objet, pour chaque objet produit par l'entité,
- un attribut "List of⁺" qui doit contenir la liste des références relatives à la configuration d'un objet pour chaque objet connu et non produit par l'entité.

A chaque valeur "démarrage commandé" incluse dans la configuration d'une entité correspond un registre de commande organisé selon un objet de commande "commande" consommé par l'entité, cet objet comprenant les attributs suivants :

- Attribut clef (field data reference) qui contient une référence locale à un objet consommé par l'entité, et
- Attribut démarrage "start" qui sert à valider le protocole d'introduction qui sera défini dans la suite de la description ; cet attribut est envoyé dans le réseau d'une façon analogue à celle de l'attribut valeur codée précédemment mentionné.

Il apparaît donc que chaque objet présente une classe spécifique. Les seules classes différenciées dans le mécanisme proposé sont : la VARIABLE et la DESCRIPTION.

La mise à jour et le maintien de la base de données sont assurés par un protocole sans connexion. Chaque entité locale maintient une copie locale d'une partie utile correspondante de la base de données et met à jour, lorsque requise, la partie de la base de données qu'elle renferme.

Les principaux services rendus par la ligne de transmission aux différentes entités utilisatrices sont la commande de la mise à jour de la base de données, l'accès à l'image locale de cette base de données et la mise à jour des objets.

La base de données est indépendante de l'emplacement physique des fournisseurs et des consommateurs de données.

La relation entre un appareil et ses données produites et consommées peut être modifiée sans engendrer de transformation de la base de données.

En plus d'une copie partielle de la base de données, chaque entité maintient une image de données pour chaque objet produit qu'il consomme. Cette image, qui contient les informations pour le transfert d'un objet à un dispositif, est modélisée selon une configuration comprenant les attributs suivants :
- un attribut "Clef" qui doit contenir une référence à un objet utilisé par le dispositif,
- un attribut "Use" qui doit contenir, soit la valeur "consommateur" si la valeur codée de l'objet doit être reçue par l'entité ou "Provider" si il doit être transmis, une valeur Both indiquant que la valeur codée doit être reçue et transmise, et une valeur indiquant que la valeur codée n'est pas à transmettre ni à recevoir,
- un attribut "Valid" qui doit contenir la valeur "Faux" si l'objet n'est pas localement disponible, et "Vrai" dans le cas contraire ; les raisons de l'invalidation comprennent notamment l'invalidation globale de l'objet (attribut de validité = Faux), une non conformité entre la description de l'objet donnée par l'entité émettrice et la description de l'objet souhaitée par l'entité locale, et des défaillances locales,
- un attribut "Prochaine valeur fournie" : si l'attribut "Use" de l'image est "Provider" ou "Both", cet attribut contiendra, soit la prochaine valeur à envoyer ou la valeur "indéfinie" ; cette valeur est remise à jour par l'utilisateur local et peut être différente de la valeur codée de l'objet ; la valeur de cet attribut doit être transmise à la ligne à la suite d'une instruction ID__DAT LPDU en effectuant, de ce fait, la mise à jour de l'attribut valeur codée de l'objet.

L'accès à la base de données est assuré par l'Arbitre de Bus qui constitue une entité unique garantissant que la mise à jour de la base de données s'effectue selon les exigences de période et de précision spécifiées par les entités utilisatrices.

La difficulté, dans un tel système, est de garantir que producteur et consommateur de la même donnée sont d'accord sur les règles d'utilisation de la variable, sur sa syntaxe et sa sémantique, et ceci, quels que soient les évènements perturbant le réseau (coupure secteur d'une station, modification de configuration d'une station, insertion d'une nouvelle station) : en aucun cas, une variable émise comme une chaîne de bits ne doit être interprétée par le receveur comme un nombre flottant ou toute autre chose différent d'une chaîne de bits.

Les solutions habituellement utilisées pour garantir la cohérence entre émetteur et receveur consistent :
- à envoyer sur le réseau, pour chaque échange, en même temps la valeur de la variable et sa description syntaxique ou sémantique ; ceci présente l'inconvénient de charger le réseau et de perdre de la bande passante, ce qui est bien souvent inacceptable ;
- à négocier, avant tout échange de variables, le contexte de communication entre les entités communicantes, en établissant une connexion logique entre émetteur et receveur ; ceci présente l'inconvénient de nécessiter un mécanisme de connexion complexe, et qui doit être établi pour toute association émetteur-récepteur(s) (plusieurs connexions possibles par produit) ; il s'avère que le coût des protocoles de connexion et de l'entretien simultané de plusieurs connexions est prohibitif pour des produits simples raccordés à la ligne de transmission, ce qui est contraire au but recherché.

L'invention a plus particulièrement pour but de résoudre ce problème de garantie de cohérence, grâce à un protocole sans contact préalable, ni acquittement, conçu de manière à économiser la bande passante de la ligne de transmission.

A cet effet, on a tout d'abord pensé à utiliser une entité centrale connaissant la configuration du réseau (produits connectés et variables échangées) et capable de vérifier les configurations des produits connectés avant de les mettre en service sur le réseau et, éventuellement, de télécharger cette configuration. Cette entité peut être le contrôleur maître si il existe, ou une entité indépendante dédiée, qui doit rester en permanence sur le réseau.

Toutefois, cette solution présente de multiples inconvénients :
.   Elle exige une entité gérant l'ensemble des configurations du réseau. Or, même si il faut, à un certain moment de la conception, une vue globale du réseau, les informations de configuration peuvent ensuite être éclatées entre différentes entités (plusieurs contrôleurs sur le réseau, plusieurs constructeurs), et il peut être pénalisant de regrouper ensuite ces informations dans une entité unique.
.   Même si l'entité centrale existe dans la phase de conception, il est pénalisant d'exiger une connexion permanente de cette entité, pour gérer les évènements perturbant le réseau (coupure de secteur, remplacement de produit défaillant...).

C'est la raison pour laquelle l'invention propose d'effectuer ce contrôle de cohérence avant toute mise en service, même dans le cas où il y a eu au préalable un contrôle en bureau d'étude à la génération, ce contrôle devant notamment permettre la communication entre les entités globalement configurées et, éventuellement, d'autres entités localement configurées (ajout de nouvelles entités sur un réseau globalement configuré).

Bien entendu, ce contrôle de cohérence devra être effectué en utilisant les services non optionnels de la couche de liaison des entités, c'est-à-dire en utilisant le mécanisme d'échange d'informations en diffusion sans acquittement.

A la mise en service d'une entité, ce contrôle sera effectué entre une entité productrice et des entités consommatrices, par l'intermédiaire de la ligne.

Il convient de noter toutefois que ce contrôle ne garantit pas que toutes les entités concernées par un objet aient le même descriptif de cet objet : il a uniquement pour but de garantir que seules les entités ayant le même descriptif de cet objet participeront à l'échange de l'objet.

Compte tenu de ce qui précède, l'invention propose d'une façon générale un procédé pour la transmission d'informations au moyen d'une ligne apte à effectuer une transmission de type série-multiplexée entre des entités aptes à émettre et/ou à recevoir des informations, en provenance et à destination de la ligne, et d'assurer des interfaces physiques entre des interfaces d'application et la ligne, de telle sorte que chaque entité connectée à la ligne puisse accéder à la totalité des informations circulant sur cette ligne, l'ensemble des données échangées étant modélisé par une base de données distribuées dont la mise à jour et le maintien sont assurés grâce au fait que chaque entité conserve et assure la mise à jour d'une copie locale de la partie utile correspondante de la base de données qu'elle renferme.

Selon l'invention, ce procédé est plus particulièrement caractérisé en ce qu'il comprend, à chacune des mises en service d'une entité, un contrôle de cohérence dans le but de garantir que les entités productrices et consommatrices interprètent une information de la même façon, ce contrôle de cohérence faisant intervenir :

- la génération par chacune des entités d'une information de validation signifiant un état invalide au moment de la mise en oeuvre du procédé,
- l'attente par les unités consommatrices de la diffusion de descriptifs émis par les entités productrices,
- l'émission sur la ligne de transmission d'un descriptif d'un objet de la base de données fourni par une entité productrice comprenant le descriptif global de cet objet, ce descriptif étant fourni sous la forme de données apériodiques ou éventuellement périodiques,
- la comparaison par chaque entité consommatrice du descriptif émis par l'entité productrice avec ses propres informations de configuration, pour vérifier et, éventuellement pour reconfigurer, lesdites informations,
- le passage de l'information de validation d'une entité consommatrice, de l'état invalide où elle se trouvait, à un état valide, dans le cas où cette entité consommatrice reconnaît lors de la phase de comparaison, le descriptif d'un objet émis sur la ligne,
- la participation à l'échange de la valeur de l'objet des entités qui engendrent une information de validation signifiant un état valide.

Compte tenu du fait que les phases de validation et d'invalidation font appel à un service d'échange non acquitté, on évite ainsi d'avoir à utiliser un système d'acquittement habituellement coûteux.

Avantageusement, les entités engendrant une information de validation à l'état valide pour un même objet présenteront le même descriptif, ce descriptif commun étant figé et pouvant être échangé à tout moment pour permettre à de nouvelles entités de participer à l'échange.

Par ailleurs, le descriptif émis sur la ligne de transmission dans le cadre de ce contrôle de cohérence sera fourni par l'entité comprenant le descriptif global de l'objet, ce descriptif étant alors fourni sous la forme de données apériodiques, ou éventuellement périodiques.

Il apparaît clairement que dès que la description locale d'une entité est modifiée ou susceptible d'être modifiée, remise à zéro, reprise secteur, modification locale..., cette entité se retire de l'échange.

Dans le cas où cette entité est consommatrice, elle peut se retirer sans perturber les autres entités participantes (seule son information de validation est à l'état invalide).

Une entité productrice qui émet un signal de validation à l'état invalide doit suspendre la mise à jour, non seulement de sa mémoire-tampon servant à l'émission (buffer d'émission), mais aussi des mémoires-tampon servant à la réception (buffer de réception) des entités réceptrices. Pour cela, elle invalide son buffer d'émission au niveau de la couche de liaison, ce qui invalide la mise à jour sur le réseau de la valeur. Cette invalidation est détectée par les entités réceptrices. Suite à cette détection (qui est garantie pour tout récepteur) toute entité réceptrice invalide localement l'objet.

Pour invalider un objet, une entité consommatrice dispose de deux informations :

- La détection d'un message d'invalidation du réseau (RP__DAT d'invalidation) incorrect ou absent après réception d'un message ID__DAT identifiant la trame de l'objet, le message (RP__DAT) du réseau devant, quant à lui, contenir les paramètres de l'objet, étant entendu qu'une invalidation d'une entité productrice non suivie d'erreur de transmission engendre un message RP__DAT d'invalidation (entité productrice en service, donnée invalide) ou un RP__DAT absent (pas de trame) (entité productrice hors service).

- Optionnellement, un signal (time out) de surveillance du rafraîchissement du réseau (promptitude) qui prend aussi en compte les absences de rafraîchissement dues aux erreurs de transmission. Ces erreurs de transmission provoquent alors, soit un RP__DAT absent, soit un RP__DAT incorrect, soit l'absence de séquence ID__DAT/RP-DAT.

L'entité consommatrice invalide obligatoirement un objet à la suite de la réception d'un RP__DAT d'invalidation.

L'entité productrice impose, quant à elle, l'invalidation globale en engendrant plusieurs messages RP__DAT d'invalidation (au moins 3) de manière à être sûr que chaque entité consommatrice détectera au moins un RP__DAT d'invalidation.

La modification du descriptif d'un objet tout en garantissant la cohérence s'effectue en deux étapes :

- une première étape consistant à invalider l'objet chez l'ensemble des entités concernées, à commencer par le producteur ;

- une deuxième étape qui intervient lorsqu'on s'est assuré que les entités concernées ont invalidé l'objet, cette étape consistant à introduire l'objet avec un nouveau descriptif.

La diffusion d'un descriptif sur le réseau doit être effectuée par une entité et une seule. Le plus simple est alors que ce descriptif soit diffusé par l'entité productrice de l'objet.

Il peut cependant exister des produits simples (modules d'entrée TOR) pour qui le stockage et la gestion de cette information sont d'une complexité prohibitive. Il est possible de stocker le descriptif ailleurs (par exemple dans l'automate), à condition de respecter strictement les règles d'invalidation. Le descriptif stocké disponible doit être à tout moment conforme à la valeur émise par le producteur, et une modification éventuelle du descriptif doit suivre une invalidation par le producteur.

Lors d'un démarrage automatique ou contrôlé, l'algorithme d'introduction peut être déclenché par chaque entité à la suite d'un évènement local tel que, par exemple, une reprise secteur, après coupure ou une remise à zéro. Cette introduction peut s'effectuer, soit automatiquement "mode démarrage automatique", soit après autorisation d'un tiers "mode démarrage commandé".

Le mode de fonctionnement est défini par l'attribut de classe "démarrage" de l'objet et l'autorisation est donnée par l'écriture d'un mot de commande représenté par l'attribut commande du dispositif et transmis par l'identifieur "command".

Le mode "démarrage commandé" permet à un programme d'application spécialisé dans le contrôle de configuration, de lire ou de télécharger la configuration des données, les données et l'image des données pour chaque entité, de faire une vérification globale, et après, seulement, de provoquer le démarrage de l'entité. Il apporte une sécurité supplémentaire en contrôlant les duplications d'identifieur des données avant collision sur le réseau.

Le descriptif diffusé sur le réseau contient (entre autres) la période réseau des données, qui doit être cohérente avec la période réseau garantie par l'Arbitre de Bus dans sa table de scrutation.

Il est possible d'utiliser un programme d'application optionnel, lié à l'Arbitre de Bus, de vérifier cette cohérence et de prendre une décision dans le cas d'une anomalie : soit de retirer les données de la table de scrutation, soit de modifier la table de scrutation en conséquence.

Comme précédemment mentionné, l'invention propose un protocole à exécuter par toute entité productrice ou consommatrice de données en vue de sa mise en service sur le réseau, en garantissant la cohérence de la description entre entités émettrices et entités consommatrices.

Des modes d'exécution de ce protocole seront décrits ci-après, à titre d'exemples non limitatifs, avec référence aux dessins annexés dans lesquels :

La figure 1 est un organigramme d'un protocole d'introduction devant être exécuté pour chaque donnée produite quand la description est mémorisée dans l'entité productrice ;

La figure 2 est un organigramme d'un protocole d'introduction qui doit être exécuté pour chaque donnée produite quand la description n'est pas en mémoire dans l'entité productrice (dans le cas où l'entité productrice n'est pas assez riche pour contenir son descriptif) ;

La figure 3 est un organigramme d'un protocole d'introduction à exécuter pour chaque donnée consommée.

Il convient de noter tout d'abord que chaque donnée produite par l'entité productrice implique l'exécution d'un algorithme. Par ailleurs, l'entité doit gérer un identifieur produit pour la valeur de chaque donnée et un autre identifieur pour le descriptif de cette donnée.

L'entité productrice doit être en outre capable d'engendrer des demandes de mises à jour apériodiques (instruction L__UPDATE = instruction de demande à la couche de liaison d'effectuer une mise à jour apériodique).

Dans le cas où l'entité productrice possède le descriptif de la variable, la phase de démarrage de l'algorithme s'effectue lors d'une situation locale (démarrage, remise à zéro, reprise secteur, configuration) telle que l'entité ne peut pas garantir la cohérence de son état avec celui de ses correspondants, dans ce cas :

- l'attribut "Valid" de la donnée Image porte la marque "Faux" ;
- le buffer d'émission dans la couche de liaison de l'entité contenant la valeur de la donnée est invalide (instruction d'écriture en buffer L__PUT, vide) ;
- ce qui provoque l'émission sur le réseau d'un message RP__DAT d'invalidation en réponse à un message ID__DAT (trame transmise par l'Arbitre de Bus qui fournit le moyen d'accès à l'entité possédant la donnée associée).

En même temps, le buffer d'émission de la couche de liaison affectée à l'entité, qui contient le descriptif de la donnée, est, lui aussi, invalide, de manière à éviter le déroulement simultané du protocole d'introduction par un consommateur.

Si la classe de l'entité (attribut de classe "démarrage" de l'entité) est "démarrage automatique", ou si cette classe est "démarrage commandé" et que le mot de commande (attribut "commande entité" de l'entité) autorise le démarrage, l'algorithme exécute une phase suivante de l'algorithme consistant à garantir l'invalidation (émission d'un signal d'invalidation "flag") chez toutes les entités réceptrices, une des méthodes possibles est de transmettre plusieurs (valeur conseillée : 3) messages RP__DAT présentant un contenu vide. Plusieurs algorithmes sont utilisables par l'entité productrice : la seule exigence est que ces algorithmes engendrent au minimum plusieurs messages RP__DAT d'invalidation dans un temps déterminé.

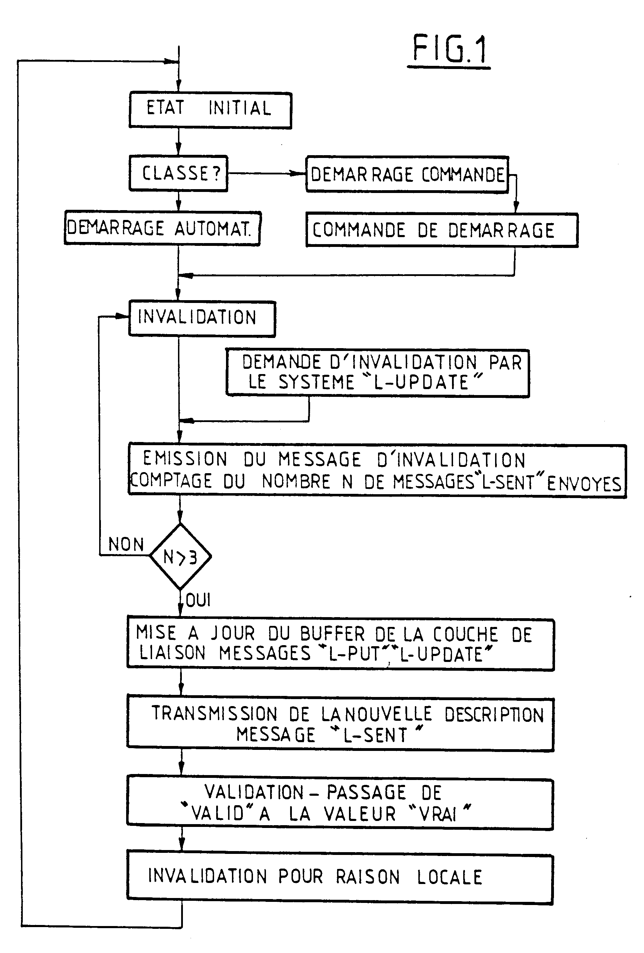

La figure 1 montre un exemple d'un tel algorithme à exécuter pour chaque donnée produite quand la description est contenue dans l'entité productrice.

Dans cet exemple, au bloc "état initial", l'image de la donnée est invalide.

L'étape suivante est alors la lecture de l'attribut de classe "Class". Dans le cas où cet attribut contient l'information démarrage automatique "Auto-Start", le système passe automatiquement à l'étape suivante. Par contre, si cette information est "démarrage commandé", le système ne passera à l'étape suivante qu'à la suite de l'émission d'une instruction de commande ("commande de démarrage = Vrai").

L'étape suivante doit comprendre l'émission d'un nombre prédéterminé (valeur conseillée : 3) de messages consécutifs RP__DAT d'invalidation. Ces messages peuvent être envoyés par le système en réponse aux scrutations cycliques de la variable par l'Arbitre de Bus, ou peuvent être provoqués par une demande explicite du système (au cas où la variable n'est pas scrutée périodiquement, ou périodiquement avec une période longue), par l'instruction "L__UPDATE". L'émission du message d'invalidation est signalée par l'indication L__SENT. Le système compte les indications L__SENT et reste en phase d'invalidation tant que leur nombre est inférieur à la valeur prédéterminée.

L'étape suivante consiste en une mise à jour du buffer de la couche de liaison en introduisant une description de la nouvelle variable. Ceci est alors exécuté à la suite de l'émission des instructions L__PUT (saisie de la description de la variable) et L__UPDATE (mise à jour de la description de la variable).

Suite à la transmission de la nouvelle description signalée par l'indication L__SENT, le système procède à la mise à jour et valide (passage de l'attribut "Valid" de l'image de données à la valeur "Vrai") l'image de la nouvelle donnée.

Dans le cas où, pour une raison locale, la variable se trouve invalidée (invalidation locale), le système réenclenche l'algorithme depuis le départ (c'est-à-dire depuis l'état inital = image de la donnée invalide). Ce processus est engagé pour chaque évènement local mettant en doute la cohérence du descriptif local par rapport au réseau.

Dans le cas où l'entité productrice ne possède pas le descriptif de la variable, un algorithme doit être exécuté pour chaque donnée produite par cette entité, laquelle doit alors gérer un identifieur objet pour cette valeur et un identifieur consommé pour le descriptif de cette valeur.

Dans ce cas, l'entité productrice n'a pas à gérer des demandes de mises à jour apériodiques (instruction L__UPDATE) pour cette fonction.

Une entité du réseau gère le descriptif de la donnée et doit donc fournir un identifieur objet pour le descriptif.

D'une façon analogue à la précédente, le démarrage de cet algorithme s'effectue à la suite de situations locales (démarrage, remise à zéro, reprise secteur, configuration...) telles que l'entité ne peut pas garantir la cohérence de son état avec celui de ses correspondants dans le réseau, l'attribut "Valid" de l'image de données indique l'information "Faux".

Le buffer d'émission dans la couche de liaison de l'entité contenant la valeur de la donnée est invalidé (instruction d'écriture en buffer L__PUT, vide), ce qui provoque l'émission sur le réseau d'un message RP__DAT d'invalidation en réponse à un message ID__DAT transmis par l'Arbitre de Bus.

Cette invalidation est surveillée par l'entité qui gère le descriptif de la donnée, laquelle invalide, en conséquence, le buffer d'émission contenant le descriptif de la donné (ceci, pour éviter le déroulement simultané du protocole d'introduction de la nouvelle donnée par un consommateur).

La façon dont l'entité gérant le descriptif est informée de l'invalidation du producteur est fonction d'un programme d'application local qui assure la détection d'un signal RP__DAT d'invalidation, qui surveille l'état de la station, etc...

Si la classe de la station (attribut de classe "démarrage") de l'entité est "démarrage automatique", ou si cette classe est "démarrage commandé" et que le mot de commande (attribut "commande-entité") autorise le démarrage, l'entité exécute la phase suivante de l'algorithme.

Cette phase consiste alors à garantir l'invalidation par le signal d'invalidation chez tous les récepteurs, en émettant au minimum le nombre prédéfini de signaux RP__DAT d'invalidation, après invalidation de la valeur et du descriptif.

Plusieurs algorithmes sont possibles entre le producteur et l'entité gérant le descriptif : la seule exigence est que ces algorithmes génèrent au moins le nombre prédéfini de signaux RP__DAT d'invalidation dans un temps déterminé.

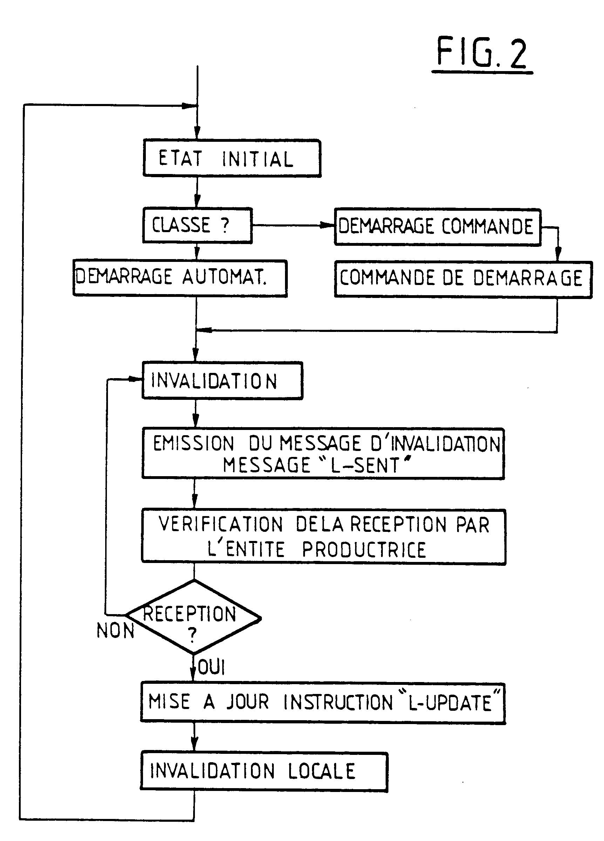

Un mode d'exécution d'un tel algorithme est illustré sur la figure 2.

Comme dans l'exemple précédent, cet algorithme part d'un bloc "état initial" dans lequel l'image de la donnée est invalide, puis d'une seconde étape incluant la lecture de l'attribut de classe.

Dans le cas où cet attribut est "démarrage automatique", le système passera à la phase suivante. Par contre, si cet attribut est "démarrage contrôlé", le système ne passera à l'étape suivante qu'à la suite de l'émission d'une instruction de commande ("commande de démarrage = Vrai").

Cette étape comprend alors l'invalidation par l'entité productrice de son buffer d'émission. L'entité gérant le descriptif, après invalidation de ce descriptif, génère au moins le nombre prédéfini de demandes apériodiques de la valeur, qui engendreront un RP__DAT d'invalidation (instruction L__SENT signal de données d'invalidation).

La phase qui suit cette étape d'invalidation est une phase de mise à jour du buffer d'émission contenant le descriptif de la donnée avec la nouvelle description par une instruction L__PUT, description dans l'entité gérant le descriptif. Une demande de mise à jour apériodique de cet identifieur est générée par l'instruction L__UPDATE, description dans cette entité qui provoque la diffusion du descriptif sur le réseau.

L'algorithme s'assure que ce descriptif a bien été reçu par l'entité productrice, sinon il repasse à la phase d'invalidation.

Sur réception du descriptif diffusé dans le réseau, le producteur traite le descriptif selon un algorithme local comparable à celui utilisé par une entité réceptrice.

Selon le résultat du traitement, il valide (ou non) l'identifieur de valeur de la donnée en mettant à jour le buffer d'émission par une instruction "L__PUT, value" et marque l'attribut de validation de la donnée image à la valeur "Vrai".

Comme précédemment mentionné, pour chaque donnée consommée, l'entité consommatrice doit implémenter un algorithme d'introduction.

A cet effet, l'entité doit gérer un identifieur produit pour la valeur et un identifieur consommé pour le descriptif de chaque donnée.

L'entité consommatrice peut ou non être capable de générer des demandes de mises à jour apériodiques (suite à l'émission d'une instruction L__UPDATE).

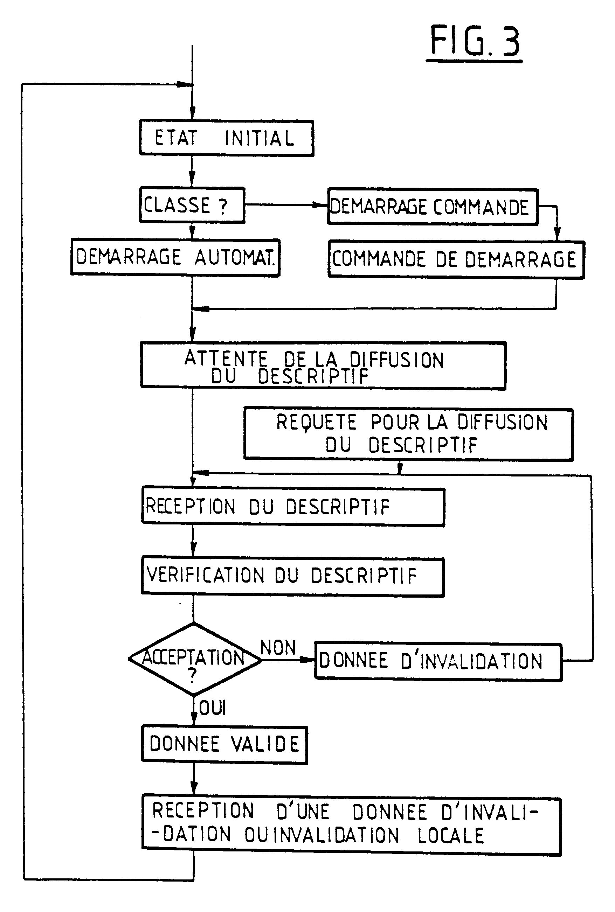

Tel que représenté sur la figure 3, l'algorithme d'introduction part d'un état initial dans lequel l'attribut de validation de l'image de la donnée est à l'état invalide ou faux. Ceci se produit dans le cas de situations locales telles que démarrage, remise à zéro, reprise secteur, configuration... telle que l'entité ne peut pas garantir la cohérence de son état avec celui de ses correspondants. La mise à jour dans le buffer de réception est invalidée.

Si la classe "Class" de l'entité (attribut de classe de départ de l'entité) est "démarrage automatique" "Auto-Start" et si le mot de commande (attribut "Command Start" de l'entité) autorise le démarrage, le système exécute la phase suivante de l'algorithme.

Cette phase consiste à attendre la diffusion du descriptif (instruction de requête pour la diffusion du descriptif = L__UPDATE) et lors de la réception "Receive" de ce descriptif, à traiter ce descriptif selon un algorithme propre et à le comparer à ses propres informations de configuration. Si elle accepte le descriptif reçu du réseau, elle valide la réception de la valeur de la donnée et marque l'attribut de l'image de la donnée à la valeur "Vrai", sinon elle reste dans le même état.

L'algorithme de traitement du descriptif dépend de l'implémentation et peut par exemple résulter des trois cas d'espèce suivants :

- L'entité possède un descriptif local complet. Elle compare le descriptif fourni par le réseau à son descriptif local et valide la donnée si ces deux descriptifs sont identiques et la laisse invalide si ces descriptifs sont différents.

- L'entité possède un descriptif partiel. Dans ce cas, elle compare ce descriptif aux parties correspondantes du descriptif reçu du réseau, et complète les parties manquantes à partir du descriptif fourni par le réseau. Dans ce cas, un traitement de configuration de l'entité peut être rendu nécessaire.

- L'entité ne possède pas de descriptif. Dans ce cas, elle accepte le descriptif émis par le réseau et se configure en conséquence.

Il convient de noter à ce sujet qu'il n'est pas nécessaire que l'entité mémorise le descriptif transmis par le réseau. Il suffit seulement qu'elle garantisse un traitement conforme à ce descriptif.

Par ailleurs, la demande de descriptif à l'initiative d'une entité consommatrice est notamment utile dans le cas de la mise en service de cette entité consommatrice, dans un réseau en fonctionnement. Si cette entité n'est pas capable de générer des demandes apériodiques, il conviendra alors d'utiliser un programme d'application surveillant les mises en service de la station pour engendrer la demande de diffusion du descriptif.

Une réponse anormale (silence ou donnée d'invalidation) à une demande de descriptif signifie que l'entité productrice est invalide. L'entité consommatrice se met alors en attente de la mise en service du producteur.

Une entité consommatrice invalidera une donnée en provoquant le passage de l'attribut de la valeur "Valid" à la valeur "Faux" sur réception d'un message RP__DAT d'invalidation ou éventuellement à la suite de la détection de plusieurs erreurs consécutives à la réception.

## Revendications

1. Procédé pour la transmission d'informations au moyen d'une ligne apte à effectuer une transmission de type série-multiplexée entre des entités aptes à émettre et/ou à recevoir des informations, en provenance et à destination de la ligne, et d'assurer des interfaces physiques entre des interfaces d'application et la ligne, de telle sorte que chaque entité connectée à la ligne puisse accéder à la totalité des informations circulant sur cette ligne, l'ensemble des données échangées étant modélisé par une base de données distribuées dont la mise à jour et le maintien sont assurés grâce au fait que chaque entité conserve et assure la mise à jour d'une copie locale de la partie utile correspondante de la base de données qu'elle renferme,
caractérisé en ce qu'il comprend, à chacune des mises en service d'une entité, un contrôle de cohérence dans le but de garantir que les entités productrices et consommatrices interprètent une information de la même façon, ce contrôle de cohérence faisant intervenir :
   - la génération par chacune des entités d'une information de validation signifiant un état invalide au moment de la mise en oeuvre du procédé,
   - l'attente par les unités consommatrices de la diffusion de descriptifs émis par les entités productrices,
   - l'émission sur la ligne de transmission d'un descriptif d'un objet de la base de données fourni par une entité productrice comprenant le descriptif global de cet objet, ce descriptif étant fourni sous la forme de données apériodiques ou éventuellement périodiques,
   - la comparaison par chaque entité consommatrice du descriptif émis par l'entité productrice avec ses propres informations de configuration, pour vérifier et, éventuellement pour reconfigurer, lesdites informations,
   - le passage de l'information de validation d'une entité consommatrice, de l'état invalide où elle se trouvait, à un état valide, dans le cas où cette entité consommatrice reconnaît lors de la phase de comparaison, le descriptif d'un objet émis sur la ligne,
   - la participation à l'échange de la valeur de l'objet des entités qui engendrent une information de validation signifiant un état valide.

2. Procédé selon la revendication 1,
caractérisé en ce que les phases de validation et d'invalidation font appel à un service d'échange non acquitté.

**3.** Procédé selon la revendication 1,
caractérisé en ce que les entités engendrant une information de validation à l'état valide pour un même objet présentent le même descriptif, ce descriptif commun étant figé et pouvant être échangé à tout moment pour permettre à de nouvelles entités de participer à l'échange.

**4.** Procédé selon la revendication 1,
caractérisé en ce que le descriptif émis sur la ligne de transmission dans le cadre du susdit contrôle de cohérence est fourni par une entité comprenant le descriptif global de l'objet, ce descriptif étant fourni sous la forme de données apériodiques ou périodiques.

**5.** Procédé selon la revendication 1,
caractérisé en ce qu'une entité productrice qui émet un signal de validation à l'état invalide suspend la mise à jour, non seulement de sa mémoire-tampon servant à l'émission, mais aussi des mémoires-tampon servant à la réception des entités réceptrices.

**6.** Procéde selon la revendication 1,
caractérisé en ce que l'invalidation d'un objet, par une entité consommatrice, s'effectue par la réception d'un message particulier du réseau.

**7.** Procédé selon la revendication 6,
caractérisé en ce que ledit message présente un contenu vide ou une trame incorrecte ou absente.

**8.** Procédé selon la revendication 1,
caractérisé en ce que l'invalidation d'un objet, par une entité consommatrice, s'effectue grâce à un signal de surveillance du rafraîchissement du réseau.

**9.** Procédé selon la revendication 1,
caractérisé en ce qu'une entité productrice impose une invalidation globale en engendrant plusieurs messages d'invalidation.

**10.** Procédé selon la revendication 1,
caractérisé en ce que la modification d'un objet, tout en garantissant la cohérence, s'effectue en deux étapes :
- une première étape consistant à invalider l'objet chez l'ensemble des entités concernées, à commencer par le producteur ;
- une deuxième étape qui intervient lorsque les entités concernées ont invalidé l'objet, cette étape consistant à introduire l'objet avec un nouveau descriptif.

**11.** Procédé selon la revendication 10,
caractérisé en ce que la diffusion sur la ligne de transmission du nouveau descriptif est effectuée par une entité et une seule.

**Claims**

**1.** Method for transmitting information by means of a line capable of effecting a series-multiplexed type transmission between entities capable of transmitting and/or receiving information from and to the line, and providing physical interfaces between application interfaces and the line, so that each entity connected to the line may have access to all the information flowing over this line, the whole of the data exchanged being modelled by a distributed data base, the updating and maintenance of which are provided because each entity keeps and updates a local copy of the corresponding useful part of the data base which it contains, characterized in that it comprises, whenever an entity is brought into service, a consistency check for guaranteeing that the producer and consumer entities interpret information in the same way, this consistency check including :
- the generation by each of the entities of validation information, this information signifying an invalid state at the time of implementation of the method,
- awaiting, by the consumer entities of the broadcasting of specifications transmitted by the producer entities,

- transmission, over the transmission line, of the specification of an object of the data base supplied by a producer entity, comprising the global specification of said object, said specification being supplied in the form of aperiodic or possibly periodic data,
- comparing, by each consumer entity, of the specification transmitted by the producer entity with its own configuration information, in order to check and possibly to reconfigure said information,
- passage of the validation information of a consumer entity from the invalid state in which it was to a valid state in the case where this consumer entity recognizes, during the comparing phase, the specification of an object transmitted on the line,
- participation in the exchange of the value of the object of the entities which generate validation information signifying a valid state.

2. Method according to claim 1, characterized in that the validation and invalidation phases use a non acquitted exchange service.

3. Method according to claim 1, characterized in that the entities generating validation information in the valid state for the same object have the same specification, this common specification being frozen and being able to be exchanged at any time so as to allow new entities to participate in the exchange.

4. Method according to claim 1, characterized in that the specification transmitted over the transmission line within the framework of said consistency check is provided by an entity comprising the global specification of the object, this specification being delivered in the form of aperiodic or periodic data.

5. Method according to claim 1, characterized in that a producer entity which transmits a validation signal in the invalid state suspends the updating, not only of its buffer memory serving for transmission but also of the buffer memories serving at reception of the receiver entities.

6. Method according to claim 1, characterized in that the invalidation of an object, by a consumer entity, takes place by the reception of a particular message from the network.

7. Method according to claim 6, characterized in that said message has an empty content or an incorrect or absent frame.

8. Method according to claim 1, characterized in that the invalidation of an object, by a consumer entity, takes place by means of a signal monitoring the refreshment of the network.

9. Method according to claim 1, characterized in that a producer entity imposes a global invalidation by generating several invalidation messages.

10. Method according to claim 1, characterized in that the modification of an object, while guaranteeing the consistency, takes place in two steps :
- a first step consisting in invalidating the object in all the entities concerned, beginning by the producer,
- a second step which takes place when the entities concerned have invalidated the object, this step consisting in introducing the object with a new specification.

11. Method according to claim 10, characterized in that broadcasting over the transmission line of the new specification is effected by one entity and only one.

**Patentansprüche**

1. Verfahren zur Übertragung von Informationen mittels einer Leitung, die eine Serien-Multiplex-Übertragung zwischen Einheiten durchführen kann, die Informationen über die Leitung aussenden und/oder von ihr empfangen können und physische Schnittstellen zwischen Anwendungsschnittstellen und der Leitung herstellen können, so daß jede mit der Leitung verbundene Einheit Zugang zur Gesamtheit der auf dieser Leitung übertragenen Informationen hat, wobei die Gesamtheit der ausgetauschten Daten von einer Basis verteilter Daten modelisiert wird, deren Aktualisierung und Aufrechterhaltung bewirkt werden dadurch, daß jede Einheit die Aktualisierung einer lokalen Kopie des entsprechenden Nutzteils der sie enthaltenden Datenbasis konserviert und bewirkt,

EP 0 368 979 B1

dadurch gekennzeichnet, daß es bei jeder Inanspruchnahme einer Einheit eine Kohärenzkontrolle enthält, um zu garantieren, daß die erzeugenden und verbrauchenden Einheiten eine Information in gleicher Weise interpretieren, wobei zu dieser Kohärenzkontrolle gehört:

- die Erzeugung einer Bestätigungsinformation in jeder der Einheiten, um einen ungültigen Zustand zum Zeitpunkt der Inbetriebnahme des Verfahrens anzuzeigen,
- das Warten der verbrauchenden Einheiten auf die Ausgabe von Descriptoren, die von den erzeugenden Einheiten ausgegeben werden,
- die Aussendung eines Descriptors eines Gegenstands der Datenbasis über die Übertragungsleitung, der von einer erzeugenden Einheit geliefert wird, wobei der Descriptor den globalen Descriptor dieses Gegenstands enthält und in Form von aperiodischen oder eventuell periodischen Daten geliefert wird,
- der Vergleich des von der erzeugenden Einheit gelieferten Descriptors mit ihren eigenen Konfigurationsinformationen durch jede verbrauchende Einheit, um diese Informationen zu prüfen und eventuell neu zu konfigurieren,
- der Übergang der Bestätigungsinformation einer verbrauchenden Einheit vom ungültigen Zustand, in dem sie sich befand, in einen gültigen Zustand, wenn diese verbrauchende Einheit während der Vergleichsphase den Descriptor eines auf der Leitung übertragenen Gegenstands erkennt,
- die Teilnahme am Austausch des Werts des Gegenstands der Einheiten, die eine Bestätigungsinformation erzeugen, welche einen gültigen Zustand bedeutet.

2. Verfahren nach Anspruch 1, dadurch gekennzeichnet, daß die Gültigkeitsphasen und die Ungültigkeitsphasen einen Austauschdienst ohne Quittung benutzen.

3. Verfahren nach Anspruch 1, dadurch gekennzeichnet, daß die eine Bestätigungsinformation im gültigen Zustand für den gleichen Gegenstand erzeugenden Einheiten denselben Descriptor aufweisen, wobei dieser gemeinsame Descriptor fixiert ist und zu jedem Zeitpunkt ausgetauscht werden kann, um es neuen Einheiten zu ermöglichen, am Austausch teilzunehmen.

4. Verfahren nach Anspruch 1, dadurch gekennzeichnet, daß der auf der Übertragungsleitung im Rahmen der Kohärenzkontrolle gesendete Descriptor von einer Einheit geliefert wird, die den globalen Descriptor des Gegenstands enthält, wobei dieser Descriptor in Form von aperiodischen oder periodischen Daten geliefert wird.

5. Verfahren nach Anspruch 1, dadurch gekennzeichnet, daß eine erzeugende Einheit, die ein Bestätigungssignal im ungültigen Zustand sendet, die Aktualisierung nicht nur ihres zur Sendung dienenden Pufferspeichers, sondern auch der zum Empfang dienenden Pufferspeicher der empfangenden Einheiten unterbricht.

6. Verfahren nach Anspruch 1, dadurch gekennzeichnet, daß ein Gegenstand durch eine verbrauchende Einheit aufgrund des Empfangs einer bestimmten Nachricht des Netzes ungültig gemacht wird.

7. Verfahren nach Anspruch 6, dadurch gekennzeichnet, daß diese Nachricht einen leeren Inhalt oder einen nicht korrekten oder nicht vorhandenen Rahmen enthält.

8. Verfahren nach Anspruch 1, dadurch gekennzeichnet, daß ein Gegenstand durch eine verbrauchende Einheit aufgrund eines Signals betreffend die Überwachung der Auffrischung des Netzes ungültig gemacht wird.

9. Verfahren nach Anspruch 1, dadurch gekennzeichnet, daß eine erzeugende Einheit eine globale Ungültigmachung erzwingt, indem sie mehrere Ungültigkeitsnachrichten erzeugt.

10. Verfahren nach Anspruch 1, dadurch gekennzeichnet, daß die Veränderung eines Gegenstands ohne Kohärenzverlust in zwei Schritten geschieht:

- einem ersten Schritt, der darin besteht, den Gegenstand bei der Gesamtheit der betroffenen Einheiten ungültig zu machen, angefangen beim Erzeuger,
- einem zweiten Schritt, wenn die betroffenen Einheiten den Gegenstand ungültig gemacht haben, wobei dieser Schritt darin besteht, den Gegenstand mit einem neuen Descriptor einzuführen.

14

**11.** Verfahren nach Anspruch 10, dadurch gekennzeichnet, daß die Ausbreitung des neuen Descriptors auf der Übertragungsleitung durch nur eine Einheit geschieht.

# FIG.1

```
            ┌─────────────────┐
            │  ETAT  INITIAL  │
            └─────────────────┘
                     │
            ┌─────────────┐        ┌──────────────────────┐
            │  CLASSE ?   │───────▶│  DEMARRAGE COMMANDE   │
            └─────────────┘        └──────────────────────┘
                     │                         │
    ┌────────────────────────┐    ┌──────────────────────────┐
    │  DEMARRAGE AUTOMAT.    │    │  COMMANDE DE DEMARRAGE   │
    └────────────────────────┘    └──────────────────────────┘
                     │                         │
            ┌─────────────────┐
            │  INVALIDATION   │
            └─────────────────┘
                     │
            ┌──────────────────────────────┐
            │  DEMANDE D'INVALIDATION PAR   │
            │   LE SYSTEME "L-UPDATE"       │
            └──────────────────────────────┘
                     │
    ┌──────────────────────────────────────────────────────┐
    │  EMISSION  DU  MESSAGE  D'INVALIDATION               │
    │ COMPTAGE DU  NOMBRE N DE MESSAGES"L-SENT" ENVOYES     │
    └──────────────────────────────────────────────────────┘
                     │
          NON     ◇  N>3  ◇
                     │ OUI
    ┌──────────────────────────────────────────────────────┐
    │  MISE A JOUR DU BUFFER DE LA COUCHE  DE              │
    │  LIAISON MESSAGES "L-PUT""L-UPDATE"                  │
    └──────────────────────────────────────────────────────┘
                     │
    ┌──────────────────────────────────────────────────────┐
    │  TRANSMISSION DE LA NOUVELLE DESCRIPTION             │
    │         MESSAGE "L-SENT"                              │
    └──────────────────────────────────────────────────────┘
                     │
    ┌──────────────────────────────────────────────────────┐
    │      VALIDATION - PASSAGE  DE                        │
    │   "VALID" A  LA  VALEUR "VRAI"                       │
    └──────────────────────────────────────────────────────┘
                     │
    ┌──────────────────────────────────────────────────────┐
    │  INVALIDATION POUR RAISON  LOCALE                   │
    └──────────────────────────────────────────────────────┘
```

# FIG.2

```
                    ┌──────────────────┐
              ┌────▶│  ETAT  INITIAL   │
              │     └──────────────────┘
              │              │
              │              ▼
              │     ┌──────────────┐      ┌──────────────────────┐
              │     │   CLASSE ?   │─────▶│ DEMARRAGE COMMANDE    │
              │     └──────────────┘      └──────────────────────┘
              │              │
              │              ▼                        ▼
              │  ┌──────────────────────┐  ┌──────────────────────────┐
              │  │ DEMARRAGE AUTOMAT.   │  │ COMMANDE DE DEMARRAGE     │
              │  └──────────────────────┘  └──────────────────────────┘
              │              │
              │              ▼
              │     ┌──────────────────┐
              │  ┌─▶│  INVALIDATION    │
              │  │  └──────────────────┘
              │  │           │
              │  │           ▼
              │  │  ┌─────────────────────────────────────────┐
              │  │  │ EMISSION  DU MESSAGE D'INVALIDATION      │
              │  │  │      MESSAGE "L-SENT"                    │
              │  │  └─────────────────────────────────────────┘
              │  │           │
              │  │           ▼
              │  │  ┌─────────────────────────────────────────┐
              │  │  │ VERIFICATION  DE LA RECEPTION PAR        │
              │  │  │      L'ENTITE  PRODUCTRICE               │
              │  │  └─────────────────────────────────────────┘
              │  │           │
              │  │           ▼
              │  │        ╱──────────╲
              │  │   NON ╱  RECEPTION ╲
              │  └──────╲      ?      ╱
              │          ╲──────────╱
              │               │ OUI
              │               ▼
              │  ┌─────────────────────────────────────────┐
              │  │ MISE A JOUR  INSTRUCTION "L-UPDATE"      │
              │  └─────────────────────────────────────────┘
              │               │
              │               ▼
              │  ┌─────────────────────────────┐
              │  │  INVALIDATION LOCALE         │
              │  └─────────────────────────────┘
              │               │
              └───────────────┘
```

# FIG. 3

ETAT INITIAL

CLASSE ? → DEMARRAGE COMMANDE

DEMARRAGE AUTOMAT. | COMMANDE DE DEMARRAGE

ATTENTE DE LA DIFFUSION DU DESCRIPTIF

REQUETE POUR LA DIFFUSION DU DESCRIPTIF

RECEPTION DU DESCRIPTIF

VERIFICATION DU DESCRIPTIF

ACCEPTATION ? — NON → DONNEE D'INVALIDATION

OUI

DONNEE VALIDE

RECEPTION D'UNE DONNEE D'INVALI--DATION OU INVALIDATION LOCALE